# EUROPÄISCHE PATENTANMELDUNG

(11) **EP 4 431 622 A1**
(43) Veröffentlichungstag der Anmeldung: **18.09.2024**
(21) Anmeldenummer: 23162561.7
(22) Anmeldetag: 17.03.2023
(51) Int. Cl.: C22B 3/08, B03D 1/02, B03D 1/08, C22B 3/10, C22B 3/00, H01M 10/54, C01B 32/215

(54) **GEZIELTE LAUGUNGSFÜHRUNG FÜR EFFIZIENTE TRENNUNG DER LITHIUM BATTERIESTOFFE**

(71) Anmelder: cylib GmbH, 52068 Aachen (DE)
(72) Erfinder: Sabarny, Paul, 52074 Aachen (DE)
(74) Vertreter: Meissner Bolte Partnerschaft mbB

(57) **Zusammenfassung**

Die Erfindung betrifft ein Verfahren zur Trennung von Graphit und Metall aus einer Schwarzmasse, umfassend
a) Bereitstellen der Schwarzmasse;
b) Durchführen eines Flotationsverfahrens mit der Schwarzmasse, wobei ein metallreicher Niederschlag und eine graphithaltige Phase erhalten werden und der metallreiche Niederschlag und die graphithaltige Phase voneinander getrennt werden;
c) Laugen des metallreichen Niederschlags mit einem sauren Laugungsmittel, wobei eine metallhaltige Flüssigkeit und ein graphitreicher Feststoff erhalten werden;
d) Trennen der metallhaltigen Flüssigkeit und des graphitreichen Feststoffs;
e) Laugen der graphithaltigen Phase aus b) mit einem sauren Extraktionsmittel, wobei das Extraktionsmittel die metallhaltige Flüssigkeit aus d) enthält, wobei eine metallreiche Flüssigkeit und ein graphitreicher Feststoff erhalten werden;
f) Trennen der metallreichen Flüssigkeit aus e) und des graphitreichen Feststoffs aus e).

## Beschreibung

Die Erfindung betrifft ein Verfahren zur Trennung von Graphit und Metall aus einer Schwarzmasse.

Die Elektromobilität gewinnt immer weiter an Bedeutung. Gleichzeitig ist die Verfügbarkeit der benötigten Rohstoffe ungenügend. Vor diesem Hintergrund gewinnt das Recycling von Lithiumionenbatteriezellen zunehmende Relevanz. Auch das Einsparen von Chemikalien und die Verringerung wässriger und fester Abfälle wird immer wichtiger.

Beim Recycling von Lithiumionenbatteriezellen kann nach gängigen Behandlungsmethoden wie Zerkleinern, thermischer Behandlung oder Ähnlichem aus Lithiumionenbatterien sogenannte Schwarzmasse gewonnen werden. Im Englischen wird Schwarzmasse als "black mass" bezeichnet. Schwarzmasse kann beispielsweise gewonnen werden, indem die Zelle zerkleinert wird und Zellbestandteile wie Elektrolyt, Bindemittel, Stromleiterfolien und Gehäuse entfernt werden. Die Schwarzmasse enthält große Mengen des Aktivmaterials von Anode und Kathode, insbesondere Graphit und Metall, wobei das Metall ein oder mehrere Metalle ausgewählt aus Lithium, Nickel, Mangan, Cobalt, Eisen, Kupfer und Aluminium umfasst.

Die Wiederverwendung der Bestandteile der Schwarzmasse erfordert deren Trennung. Für den Graphit gilt weiterhin, dass die Trennung schonend sein sollte, um die Wiederverwendung des Materials vor allem in der High-Tech Industrie zu ermöglichen.

Vor diesem Hintergrund besteht eine Aufgabe der vorliegenden Erfindung darin, eine effiziente, material- und ressourcenschonende Trennung der Bestandteile der Schwarzmasse anzugeben.

Aus den Bestrebungen, diese Aufgabe zu lösen, resultiert ein Verfahren zur Trennung von Graphit und Metall aus einer Schwarzmasse, umfassend
a) Bereitstellen der Schwarzmasse, wobei die Schwarzmasse vorzugsweise aus einer Lithiumionenbatteriezelle stammt,
b) Durchführen eines Flotationsverfahrens mit der Schwarzmasse, wobei ein metallreicher Niederschlag und eine graphithaltige Phase erhalten werden und der metallreiche Niederschlag und die graphithaltige Phase voneinander getrennt werden,
c) Laugen des metallreichen Niederschlags mit einem sauren Laugungsmittel, wobei eine metallhaltige Flüssigkeit und ein graphitreicher Feststoff erhalten werden,
d) Trennen der metallhaltigen Flüssigkeit und des graphitreichen Feststoffs,
e) Laugen der graphithaltigen Phase aus b) mit einem sauren Extraktionsmittel, wobei das Extraktionsmittel die metallhaltige Flüssigkeit aus d) enthält, wobei eine metallreiche Flüssigkeit und ein graphitreicher Feststoff erhalten werden,
f) Trennen der metallreichen Flüssigkeit aus e) und des graphitreichen Feststoffs aus e).

Das Verfahren kann als Doppellaugungsverfahren bezeichnet werden, wobei eine Laugung des metallreichen Niederschlags aus b) (erste Laugung) und eine Laugung der graphithaltigen Phase aus b) (zweite Laugung) durchgeführt werden. Das in c) zum Laugen des metallreichen Niederschlags verwendete Laugungsmittel wird in e) erneut zur Laugung eingesetzt. Mit anderen Worten besteht das Extraktionsmittel zum Großteil aus der metallhaltigen Flüssigkeit aus d), wobei die Zugabe beispielsweise von Oxidationsmittel, Hilfsstoffen etc. für die zweite Laugung nicht ausgeschlossen sein soll. Durch das Laugen in e) (die zweite Laugung) wird das Extraktionsmittel und somit auch die metallhaltige Flüssigkeit aus d) weiter mit Metall angereichert. Zugleich wird der Graphit in der graphithaltigen Phase aufgereinigt. Während der zweiten Laugung steigt der pH-Wert leicht, so dass nach Abschluss der zweiten Laugung ohne weitere Einstellung des pH-Werts ein Gewinnen von Kupfer aus der metallreichen Flüssigkeit aus f) möglich ist. Das Gewinnen weiterer Metalle ist nach geringfügiger Einstellung des pH-Werts möglich. So werden Ressourcen gespart und Abfälle vermieden.

Durch das erfindungsgemäße Verfahren wird aus der Schwarzmasse ein graphitreicher Feststoff gewonnen (in d) und f)). Der graphitreiche Feststoff kann aufgrund seiner Reinheit auch als Graphit bezeichnet werden. Der graphitreiche Feststoff (Graphit) wird durch das erfindungsgemäße Verfahren aufgereinigt, wobei eine Qualität erreicht wird, die sich für den Einsatz als Rezyklat in Batterien oder generell in der Hightech-Industrie eignet. Durch das erfindungsgemäße Verfahren wird also ein reiner graphitreicher Feststoff erhalten. Der graphitreiche Feststoff aus d) und f) weist bezogen auf das Gesamtgewicht des graphitreichen Feststoffs aus d) und f) jeweils einen Gehalt an Graphit von zwischen 95 Gew.-% und 99,5 Gew.-%, insbesondere von zwischen 98,0 Gew.-% und 99,5 Gew.-%, auf. Mit anderen Worten weist der graphitreiche Feststoff aus d) bezogen auf das Gesamtgewicht des graphitreichen Feststoffs aus d) einen Gehalt an Graphit von zwischen 95 Gew.-% und 99,5 Gew.%, insbesondere von zwischen 98,0 Gew.-% und 99,5 Gew.-%, auf. Mit anderen Worten weist der graphitreiche Feststoff aus f) bezogen auf das Gesamtgewicht des graphitreichen Feststoffs aus f) einen Gehalt an Graphit von zwischen 95 Gew.-% und 99,5 Gew.-%, insbesondere von zwischen 98,0 Gew.-% und 99,5 Gew.-%, auf.

Das erfindungsgemäße Verfahren ist auch schonend, so dass der Graphit seine Morphologie beibehält. Dadurch eignet sich der Graphit als Rezyklat in Batteriezellen oder generell in der Hightech-Industrie. Das erfindungsgemäße Verfahren weist den Vorteil auf, dass die Morphologie des Graphits im Wesentlichen unverändert bleibt. Insbesondere bewahrt der Graphit seine sphärische Form, seine Oberflächenstruktur und seine elektrochemischen Eigenschaften für die Verwendung als Anodenmaterial und für andere HighTech-Anwendungen, z.B. in bipolaren Platten in Elektrolysevorrichtungen zur Erzeugung von Wasserstoff.

Ferner werden durch das erfindungsgemäße Verfahren die metallischen Anteile aus der Schwarzmasse in Lösung gebracht. Dabei wird die Säurelösung mit Metall angereichert und die metallreiche Flüssigkeit kann für die effiziente Rückgewinnung des Metalls verwendet werden.

Der Begriff Metall umfasst ein oder mehrere Metalle ausgewählt aus Lithium, Nickel, Mangan, Cobalt, Eisen, Kupfer und Aluminium. Gemeinsam mit dem ein oder den mehreren Metallen wird mit dem erfindungsgemäßen Verfahren auch Phosphor aus der Schwarzmasse abgetrennt, insbesondere wenn die Schwarzmasse LiFePO₄ enthält. Phosphor ist ebenfalls in der der metallreichen Flüssigkeit aus e) angereichert, insbesondere wenn die Schwarzmasse LiFePO₄ enthält.

Das saure Laugungsmittel ist vorzugsweise wässrig. Dies bedeutet, dass das saure Laugungsmittel zu einem großen Anteil (>50 Gew.-%) Wasser enthält.

Das saure Extraktionsmittel ist vorzugsweise wässrig. Dies bedeutet, dass das saure Extraktionsmittel zu einem großen Anteil (>50 Gew.-%) Wasser enthält.

Das erfindungsgemäße Verfahren umfasst das Bereitstellen einer Schwarzmasse. Schwarzmasse kann hierfür beispielsweise aus Lithiumionenbatteriezellen gewonnen werden oder auf dem freien Markt erworben werden. Die Schwarzmasse stammt vorzugsweise aus mindestens einer Lithiumionenbatteriezelle. Die Schwarzmasse enthält Graphit und ein Kathodenaktivmaterial, vorzugsweise ausgewählt aus NMC-Aktivmaterial (Lithium-Nickel-Mangan-Cobalt-Oxid-Aktivmaterial) und LFP-Aktivmaterial (LiFePO₄-Aktivmaterial) sowie Mischungen davon. Mit anderen Worten enthält die Schwarzmasse Graphit und Metall, wobei das Metall ein oder mehrere Metalle ausgewählt aus Lithium, Nickel, Mangan, Cobalt, Eisen, Kupfer und Aluminium umfasst. Die Schwarzmasse kann auch Phosphor enthalten, insbesondere wenn die Schwarzmasse LFP-Aktivmaterial enthält. In einer bevorzugten Ausführungsform liegt die durchschnittliche Partikelgröße der Schwarzmasse im Bereich von 125 µm bis 1,5 mm.

Durch das Flotationsverfahren gelingt das Gewinnen des metallreichen Niederschlags und der graphithaltigen Phase aus der Schwarzmasse und das Trennen des metallreichen Niederschlags und der graphithaltigen Phase besonders gut. Flotationsverfahren mit Schwarzmasse sind dem Fachmann bekannt und beispielsweise beschrieben von Anna Vanderbruggen et al. in "Improving Separation Efficiency in End-of-Life Lithium-Ion Batteries Flotation Using Attrition Pre-Treatment" (Januar 2022, Minerals 12 (1)), das hiermit vollumfänglich einbezogen wird.

Vorzugsweise wird im Flotationsverfahren ein Sammler verwendet. Vorzugsweise wird Kerosin als Sammler verwendet. Der Sammler führt zu einem verbesserten Abtrennen der graphithaltigen Phase. Dadurch steigt die Ausbeute an gewonnenem Graphit und der metallreiche Niederschlag enthält weniger Graphit, ist also reiner. Allerdings reißt der Sammler auch Metall aus dem Aktivmaterial mit, weshalb im Nachgang eine schonende und wirksame Reinigung der graphithaltigen Phase und Gewinnung des Metalls wichtig ist. Diese Reinigung und Gewinnung des Metalls wird durch die zweite Laugung erreicht.

Vorzugsweise wird im Flotationsverfahren ein Schäumer verwendet. Vorzugsweise wird Methylisobutylcarbinol als Schäumer verwendet. Der Schäumer verbessert die Flotation und trägt zu einer effizienten Trennung bei.

Die Lithiumionenbatteriezelle ist vorzugsweise ausgewählt aus einer NMC-Lithiumionenbatteriezelle und/oder einer LFP-Lithiumionenbatteriezelle.

Vorzugsweise erfolgt das Trennen der metallhaltigen Flüssigkeit und des graphitreichen Feststoffs in d) durch eine Filtration.

Vorzugsweise erfolgt das Trennen der metallreichen Flüssigkeit aus e) und des graphitreichen Feststoffs aus e) in f) durch eine Filtration.

In einer bevorzugten Ausführungsform weist die metallreiche Flüssigkeit aus f) einen pH-Wert im Bereich 0,0 bis 1,5 auf. Mit anderen Worten erfolgt durch die zweite Laugung eine teilweise Neutralisierung der metallhaltigen Flüssigkeit aus d) und des darin enthaltenen extrem sauren Laugungsmittels aus der ersten Laugung. Durch die teilweise Neutralisierung werden im weiteren Verfahren durch die Einsparung von Reagenzien zur Einstellung des pH-Werts Chemikalien gespart und die Menge wässriger Abfälle verringert.

Der durch die zweite Laugung gestiegene pH-Wert ermöglicht das Gewinnen von Kupfer aus der metallreichen Flüssigkeit aus f) ohne weitere Einstellung des pH-Werts. In einer bevorzugten Ausführungsform umfasst das Verfahren daher das Gewinnen von Kupfer aus der metallreichen Flüssigkeit aus f) ohne weitere Einstellung des pH-Werts. Das Gewinnen weiterer Metalle (insbesondere ausgewählt aus Lithium, Nickel, Mangan, Cobalt, Eisen und Aluminium) ist nach geringfügiger weiterer Einstellung des pH-Werts möglich. Da keine Einstellung des pH-Werts oder nur eine geringfügige weitere Einstellung des pH-Werts nötig ist, werden durch Einsparung von Reagenzien zur Einstellung des pH-Werts Chemikalien gespart und die Menge wässriger Abfälle verringert.

In einer bevorzugten Ausführungsform enthalten das Laugungsmittel und das Extraktionsmittel ein Oxidationsmittel. Das Oxidationsmittel unterstützt die Auflösung der metallischen Anteile der Schwarzmasse und verbessert die Ausbeute des Verfahrens. Das Oxidationsmittel ist vorzugsweise Wasserstoffperoxid. Vorzugsweise beträgt die Konzentration an Wasserstoffperoxid in dem Laugungsmittel in c) und in dem Extraktionsmittel in e) bezogen auf das Gesamtvolumen des jeweiligen Mittels 0,1 Vol.-% bis 10 Vol.-%.

Das Laugungsmittel und das Extraktionsmittel sind sauer. Vorzugsweise enthalten das Laugungsmittel und das Extraktionsmittel mindestens eine anorganische Säure. Vorzugsweise ist die mindestens eine Säure ausgewählt aus Chlorwasserstoff und Schwefelsäure.

Vorzugsweise beträgt der pH-Wert in dem Laugungsmittel in c) ≤0,0. Ein besonders geeigneter Bereich für den pH-Wert in dem Laugungsmittel in c) ist zwischen -1,5 und 0,0.

In einer Ausführungsform beträgt die Konzentration an Säure in dem Laugungsmittel in c) 0,5 mol/L bis 4 mol/L.

Vorzugsweise weist die metallhaltige Flüssigkeit aus d) und das Extraktionsmittel einen pH-Wert <1,0 auf. Ein besonders geeigneter Bereich für den pH-Wert der metallhaltigen Flüssigkeit aus d) und des Extraktionsmittels beträgt -0,5 bis 0,5.

Vorzugsweise beträgt die Temperatur in c) zwischen 30 °C und 80 °C.

Vorzugsweise beträgt die Reaktionszeit in c) 60 Minuten bis 180 Minuten.

Vorzugsweise beträgt die Temperatur in e) zwischen 30 °C und 60 °C.

Vorzugsweise beträgt Reaktionszeit in e) 30 Minuten bis 120 Minuten.

Vorzugsweise beträgt das Verhältnis (Masse zu Volumen) metallreichen Niederschlags zu saurem Laugungsmittel beim Laugen des metallreichen Niederschlags in c) 1:5 bis 1:15. Mit anderen Worten werden pro Kilogramm metallreichen Niederschlags 5 Liter bis 15 Liter des sauren Laugungsmittels verwendet.

In einer Ausführungsform umfasst das Verfahren vor a) das Bereitstellen einer Lithiumionenbatteriezelle und das Gewinnen von Schwarzmasse aus der Lithiumionenbatteriezelle. Das Gewinnen der Schwarzmasse umfasst die Zerkleinerung der Lithiumionenbatteriezelle. Die Zerkleinerung der Lithiumionenbatteriezelle führt vorzugsweise zu einer durchschnittlichen Partikelgröße im Bereich von 125 µm bis 1,5 mm.

Zur Entfernung von organischem Bindemittel und Elektrolytbestandteilen kann eine thermische Behandlung der Lithiumionenbatteriezelle bei 480 °C - 650 °C, vorzugsweise 480 °C - 600 °C, erfolgen.

In einer Ausführungsform umfasst das Verfahren vor a) die thermische Behandlung der Lithiumionenbatteriezelle und eine anschließende Zerkleinerung der Lithiumionenbatteriezelle.

In einer Ausführungsform umfasst das Verfahren vor a) eine Zerkleinerung der Lithiumionenbatteriezelle unter Schutzgas und nachfolgend die thermische Behandlung der Lithiumionenbatteriezelle.

In einer Ausführungsform umfasst das Verfahren vor a) eine Zerkleinerung der Lithiumionenbatteriezelle unter Einsatz von Wasser und nachfolgend die thermische Behandlung der Lithiumionenbatteriezelle. Mit anderen Worten wird die Wassershredder-Technologie eingesetzt.

In einer Ausführungsform umfasst das Verfahren das Entfernen der Stromleiterfolien nach der thermischen Behandlung. Das Entfernen erfolgt durch gängige mechanische Aufbereitungsschritte wie beispielsweise Siebung.

Ausführungsformen innerhalb dieser Schrift können beliebig miteinander kombiniert werden, sofern sich aus deren Gegenstand und der Beschreibung der Ausführungsformen nicht eindeutig Gegenteiliges ergibt.

Die Verben "enthalten" und "umfassen" und ihre Konjugationen enthalten auch das Verb "bestehen aus" mit seinen Konjugationen.

Bevorzugte Ausführungsformen sind auch in den Patentansprüchen wiedergegeben.

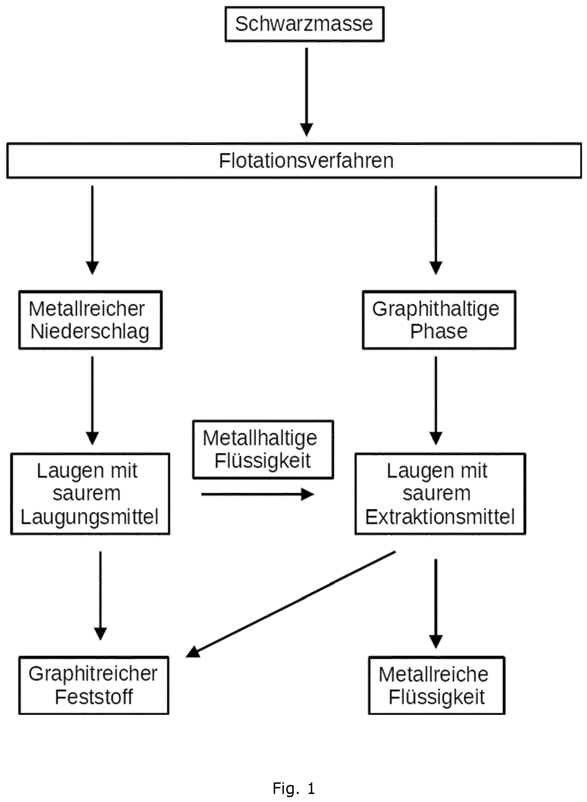

Fig. 1 gibt einen Überblick über ein erfindungsgemäßes Verfahren.

Nachfolgend wird die Erfindung an Hand eines Ausführungsbeispiels weiter veranschaulicht.

Zunächst wird in diesem Ausführungsbeispiel Schwarzmasse gewonnen. Ausgangspunkt sind in diesem Ausführungsbeispiel NMC-Lithiumionenbatterien. Die Lithiumionenbatterien sind ausgediente Lithiumionenbatterien (auch bekannt als End-of-Life, EoL) und Produktionsausschuss aus der Lithiumionenbatterienherstellung. Die Lithiumionenbatterien sind tiefenentladen und bis auf Modul- oder Zellebene demontiert.

Es erfolgt eine Zerkleinerung der Lithiumionenbatteriezellen und Lithiumionenbatteriemodule unter Stickstoff (N₂) auf eine durchschnittliche Partikelgröße von ca. 150 µm. Dann folgt eine thermische Behandlung bei 480 - 600 °C zur Entfernung von organischem Bindemittel und Elektrolytbestandteilen. Eine Alternative bestünde in der direkten thermischen Vorbehandlung (auch bekannt als Pyrolyse) der Batteriezellen bei einer Temperatur zwischen 480 - 600 °C und anschließender Zerkleinerung. Eine weitere Alternative bestünde in der Zerkleinerung der Batteriezellen unter Einsatz von Wasser mit einer anschließenden thermischen Behandlung der zerkleinerten Fraktion bei 480 - 600 °C.

Nach der thermischen Behandlung werden die Stromleiterfolien sowie eventuell vorliegende Reste des Gehäuses durch Siebung entfernt.

Übrig bleibt die Schwarzmasse. Die Schwarzmasse wird anschließend mittels Flotation behandelt, wobei die Schwarzmasse in Wasser gegeben und mit Additiven wie Kerosin als Sammler und Methylisobutylcarbinol als Schäumer versetzt wird. Im Anschluss wird durch Druckluft ein Schaumprodukt, das graphithaltig ist, erzeugt. Bei optimierter Führung kann hier bereits eine Graphitreinheit von 80 % bis 90 % erzielt werden, wobei mindestens eine Qualität von 75 % erreicht wird. Die metallischen Anteile fallen während der Flotation zu Boden und werden Berge (englisch: Tailings) genannt.

Das graphithaltige Schaumprodukt (graphithaltige Phase) und die Berge (metallreicher Niederschlag) werden anschließend getrennt voneinander gelaugt. Dabei können Laugungsmittel enthaltend Chlorwasserstoff (HCl) und/oder Schwefelsäure (H₂SO₄) eingesetzt werden. Zusätzlich wird H₂O₂ als Oxidationsmittel eingesetzt.

Zuerst wird die Bergefraktion (metallreicher Niederschlag) gelaugt. Hier wird ein Laugungsmittel mit Salzsäure und einem pH-Wert von -1,5 bis 0,0 gewählt. Zusätzlich wird 35%ige H₂O₂ in die Suspension gegeben. Das Wasserstoffperoxid macht dabei 5 Vol.-% der Gesamtlösung aus. Das Verhältnis (Masse zu Volumen) metallreichen Niederschlags zu saurem Laugungsmittel beträgt ca. 1:6.

Die Laugungszeit beträgt in diesem Ausführungsbeispiel ca. 150 min. Die Temperatur beträgt in diesem Ausführungsbeispiel 30 °C bis 80 °C. Die Suspension wird ständigem Rühren ausgesetzt. Durch das Verfahren wird Säure verbraucht, sodass der pH-Wert nach Abschluss noch sauer bleibt und zwischen -0,5 bis 0,5 liegt.

Nach Ablauf der Laugungszeit wird die Suspension mittels gängiger Filtertechnik filtriert und in Feststoff und Flüssigkeit, die mit Metallionen angereichert ist (metallhaltige Flüssigkeit), getrennt. Der Feststoff ist ein angereichertes Graphitprodukt (graphitreicher Feststoff), das sich zur weiteren Verarbeitung eignet. Die Flüssigkeit, die Metallionen beinhaltet und einen sauren pH-Wert aufweist, wird als Laugungsmittel (Extraktionsmittel) für das graphithaltige Schaumprodukt verwendet.

Das graphithaltige Schaumprodukt wird mit dem Laugungsmittel aus der ersten Laugung (angereichert mit Metallionen und mit saurem pH-Wert) gemischt und gelaugt. Die verringerte Säurekonzentration ist dabei optimal, um die angereicherte Graphitfraktion schonend zu behandeln, was den Erhalt der Morphologie ermöglicht. Die Laugungszeit beträgt ca. 100 min bei einer Temperatur von 30 °C bis 60 °C. Zusätzlich wird 35%ige H₂O₂ in die Suspension gegeben. Das Wasserstoffperoxid macht ca. 5 Vol.-% der Gesamtlösung aus. Die Suspension wird unter ständiger Rührung gehalten.

Nach Ablauf der Laugungszeit wird die Suspension mittels gängiger Filtertechnik filtriert und in Feststoff und die Flüssigkeit, die noch stärker mit Metallionen angereichert ist, getrennt. Der Feststoff ist ein Graphitprodukt mit einer Reinheit von ≥ 98,0 % (graphitreicher Feststoff). Der Graphit hat seine Morphologie erhalten und eignet sich somit als Rezyklat für den Einsatz in neuer Batterietechnik. Alternativ kann eine andere High-Tech-Industrie gewählt werden. Die stark metallangereicherte Restlaugungslösung (metallreiche Flüssigkeit) weist nach der Behandlung einen pH-Wert zwischen 0,0 und 1,5 auf. Dies ermöglicht die Rückgewinnung von Kupfer, beispielsweise aus Rückständen der Stromleiterfolien, ohne weitere pH-Wert-Anpassung. Das Gewinnen der weiteren Metalle (in diesem Ausführungsbeispiel insbesondere Co, Ni und Mn) ist nach geringfügiger Einstellung des pH-Werts möglich.

## Patentansprüche

1. Verfahren zur Trennung von Graphit und Metall aus einer Schwarzmasse, umfassend
a) Bereitstellen der Schwarzmasse;
b) Durchführen eines Flotationsverfahrens mit der Schwarzmasse, wobei ein metallreicher Niederschlag und eine graphithaltige Phase erhalten werden und der metallreiche Niederschlag und die graphithaltige Phase voneinander getrennt werden;
c) Laugen des metallreichen Niederschlags mit einem sauren Laugungsmittel, wobei eine metallhaltige Flüssigkeit und ein graphitreicher Feststoff erhalten werden;
d) Trennen der metallhaltigen Flüssigkeit und des graphitreichen Feststoffs;
e) Laugen der graphithaltigen Phase aus b) mit einem sauren Extraktionsmittel, wobei das Extraktionsmittel die metallhaltige Flüssigkeit aus d) enthält, wobei eine metallreiche Flüssigkeit und ein graphitreicher Feststoff erhalten werden;
f) Trennen der metallreichen Flüssigkeit aus e) und des graphitreichen Feststoffs aus e).

2. Verfahren nach Anspruch 1, wobei die metallreiche Flüssigkeit aus f) einen pH-Wert im Bereich 0,0 bis 1,5 aufweist.

3. Verfahren nach irgendeinem der vorherigen Ansprüche, umfassend das Gewinnen von Kupfer aus der metallreichen Flüssigkeit aus f) ohne weitere Einstellung des pH-Werts.

4. Verfahren nach irgendeinem der vorherigen Ansprüche, wobei der graphitreiche Feststoff aus d) und f) bezogen auf das Gesamtgewicht des graphitreichen Feststoffs aus d) und f) jeweils einen Gehalt an Graphit von zwischen 95 Gew.-% und 99,5 Gew.% aufweist.

5. Verfahren nach irgendeinem der vorherigen Ansprüche, wobei die Morphologie des Graphits im Wesentlichen unverändert bleibt.

6. Verfahren nach irgendeinem der vorherigen Ansprüche, wobei das Laugungsmittel und das Extraktionsmittel ein Oxidationsmittel, vorzugsweise Wasserstoffperoxid, enthalten.

7. Verfahren nach irgendeinem der vorherigen Ansprüche, wobei das Laugungsmittel und das Extraktionsmittel mindestens eine anorganische Säure enthalten, vorzugsweise mindestens eine Säure ausgewählt aus Chlorwasserstoff und Schwefelsäure.

8. Verfahren nach irgendeinem der vorherigen Ansprüche, wobei der pH-Wert in dem Laugungsmittel in c) ≤ 0,0 beträgt.

9. Verfahren nach irgendeinem der vorherigen Ansprüche, wobei die metallhaltige Flüssigkeit aus d) und das Extraktionsmittel einen pH-Wert < 1,0, vorzugsweise von -0,5 bis 0,5, aufweist.

10. Verfahren nach irgendeinem der vorherigen Ansprüche, wobei im Flotationsverfahren ein Sammler verwendet wird.

11. Verfahren nach irgendeinem der vorherigen Ansprüche, wobei die Konzentration an Wasserstoffperoxid in dem Laugungsmittel in c) und in dem Extraktionsmittel bezogen auf das Gesamtvolumen des jeweiligen Mittels 0,1 Vol.-% bis 10 Vol.-% beträgt.

12. Verfahren nach irgendeinem der vorherigen Ansprüche, wobei die Temperatur in c) zwischen 30 °C und 80 °C beträgt.

13. Verfahren nach irgendeinem der vorherigen Ansprüche, wobei die Temperatur in e) zwischen 30 °C und 60 °C beträgt.

14. Verfahren nach irgendeinem der vorherigen Ansprüche, wobei die Schwarzmasse Graphit und ein Kathodenaktivmaterial ausgewählt aus NMC-Aktivmaterial, LFP-Aktivmaterial sowie Mischungen davon enthält.

15. Verfahren nach irgendeinem der vorherigen Ansprüche, wobei das Metall ein oder mehrere Metalle ausgewählt aus Lithium, Nickel, Mangan, Cobalt, Eisen, Kupfer und Aluminium umfasst.
